# EUROPÄISCHE PATENTANMELDUNG

(11) **EP 2 573 787 A1**
(43) Veröffentlichungstag der Anmeldung: **27.03.2013**
(21) Anmeldenummer: 11182092.4
(22) Anmeldetag: 21.09.2011
(51) Int. Cl.: H01H 71/02, H01H 9/34

(54) **Leistungsschalter mit optimierter Gehäusestabilisierung, insbesondere bei hoher Schaltleistung**

(71) Anmelder: Siemens Aktiengesellschaft, 80333 München (DE)
(72) Erfinder: Rösch, Bernhard, 92237 Sulzbach-Rosenberg (DE); Spies, Alexander, 90762 Fürth (DE)

(57) **Zusammenfassung**

Die Erfindung betrifft einen Leistungsschalter mit einem Gehäuse, in welchem ein erster Schaltgerätebereich, in welchem eine Löschkammervorrichtung und eine Kontaktschiebervorrichtung mit beweglichen Schaltstücken angeordnet sind, welche gegenüber liegend zu Festschaltstücken positioniert sind, und ein zweiter Schaltgerätebereich angeordnet sind, in welchem eine Stromauslösegruppe aus einem Kurzschlussauslöser und einem Überlastauslöser angeordnet sind.

Die Erfindung zeichnet sich dadurch aus, dass die Löschkammervorrichtung im ersten Schaltgerätebereich einen Blendeneinsatz (5) aufweist, der mindestens einen ersten passgenauen Abstandshalter (11) zwischen zwei parallel zu den Löschblechen (13) der Löschkammervorrichtung angeordneten Gehäusewandungen des ersten Schaltgerätebereichs aufweist.

## Beschreibung

Die Erfindung betrifft einen Leistungsschalter mit einem Gehäuse, in welchem ein erster Schaltgerätebereich, in welchem eine Löschkammervorrichtung und eine Kontaktschiebervorrichtung mit beweglichen Schaltstücken angeordnet sind, welche gegenüber liegend zu Festschaltstücken positioniert sind, und ein zweiter Schaltgerätebereich angeordnet sind, in welchem eine Stromauslösergruppe aus einem Kurzschlussauslöser und einem Überlastauslöser angeordnet sind.

Leistungsschalter, insbesondere Niederspannungs-Leistungsschalter, sind im Kurzschlussfall elektromagnetische Selbstschalter. Ihre Arbeitsweise entspricht prinzipiell der Arbeitsweise von Leitungsschutzschaltern. Sie sind meist mit einem thermischen und einem magnetischen Auslöser ausgestattet und besitzen somit die gleichen konstruktiven Elemente wie Leitungsschutzschalter. Allerdings sind sie für größere Bemessungsströme konstruiert, außerdem sind die Auslöser von Leistungsschaltern, anders als beim Leitungsschutzschalter, teilweise separat einstellbar. Im Niederspannungsbereich werden die Schalter auch als Motorschutzschalter eingesetzt.

Die Aufgabe des Leistungsschalters besteht darin, nachgeordnete Anlagen, insbesondere Drehstrommotoren vor Schäden durch Überlast- oder Kurzschluss zu schützen. Dabei soll der Leistungsschalter diese Ströme in Verbindung mit den Einrichtungen des Netzschutzes ausschalten. Befindet sich Gas zwischen den beiden Polen, wird es bei entsprechend hoher Spannungsdifferenz zwischen den Polen durch den Überschlag ionisiert, und es bildet sich eine sich selbst erhaltende Gasentladung, die auch als Lichtbogen bezeichnet wird. Dieses Plasma leitet nicht nur weiterhin Strom, sondern reduziert auch die Lebensdauer des Bauteils, bei starken Strömen kann es den Schalter sogar zerstören. Im Gegensatz zu Trennern sind Leistungsschalter so konstruiert, dass der beim Öffnen der Schaltkontakte entstehende Lichtbogen schnell und ohne Beschädigung des Schalters gelöscht und damit der Stromfluss unterbrochen wird.

Ein besonderes Problem bei Leistungsschaltern mit hohem Schaltvermögen, insbesondere bis zu 100 kA bei Nennströmen bis zu 80 A besteht darin, dass bei solch großen Kurzschlüssen die Belastung auf die Kammerwände, das heißt, insbesondere auf das Unterteil des Leistungsschalters auf Grund der großen Druckentwicklung sehr hoch ist. Die Gehäusewände können sich bei solchen Auslösevorgängen nach außen biegen oder zu einem Einriss im Oberteil des Leistungsschalters führen. Im schlimmsten Fall werden Teile des Oberteils weggebrochen.

Dazu beschreibt die WO 01/33595 A1 einen elektrischen Schutzschalter, insbesondere Motorschutzschalter, mit einem Gehäuse aus Duroplast, einer Schaltkontaktanordnung, einer Auslöseeinheit mit mindestens einem Bimetallauslöser, einer auf ein Schaltschloss wirkenden und von dem Bimetall betätigbare Auslösebrücke und einem Teileträger aus Isolierstoff für verschiedene, auf diesem Teileträger formatierbare Kontakt- und Anschlussteile der Auslöseeinheit. Bei diesem elektrischen Schutzschalter ist vorgesehen, die vormontierbaren Kontakt- und Anschlussteile der Auslöseeinheit in das Gehäuse oder einem Gehäuseteil zu verkleben, so dass die Befestigung dieser vormontierbaren Kontakt- und Anschlussteile im Gehäuse ohne zusätzliche Verbindung erfolgt. Dazu sind am Gehäuse Klebetaschen vorhanden, die mit Klebematerial befüllt sind. In diese Klebetaschen ragen Stifte der Auslöseeinheit, die in den Klebetaschen verklebar sind. Durch die dauerhafte Klebeverbindung wird die Bimetallposition stabil gehalten. Thermische und mechanische Spannungen werden durch die Verwendung des Klebemittels und durch das Kleben erheblich gemindert, während die Wärme- und Formstabilität gewährleistet ist.

Der Nachteil am Stand der Technik besteht darin, dass Klebeverbindungen immer einem Alterungsprozess unterworfen sind, und zudem die Montage aufwändig ist, da für eine Klebeverbindung immer zwei Teile passgenau zueinander geführt werden müssen.

Demgemäß besteht die Aufgabe der vorliegenden Erfindung darin, einen Leistungsschalter zu schaffen, der auch bei hohen Schaltleistungen stabile Gehäusewandungen aufweist und dabei eine einfache Montagehandhabung bietet.

Diese Aufgabe wird durch einen Leistungsschalter mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch einen Leistungsschalter mit einem ersten Schaltgerätebereich gelöst, in welchem eine Löschkammervorrichtung und eine Kontaktschiebervorrichtung mit beweglichen Schaltstücken angeordnet sind, welche gegenüber liegend zu Festschaltstücken positioniert sind, und einen zweiten Schaltgerätebereich, in welchem eine Auslösegruppe aus einem Kurzschlussauslöser und einem Überlastauslöser angeordnet sind. Die Erfindung zeichnet sich dadurch aus, dass die Löschkammervorrichtung im ersten Schaltgerätebereich einen Blendeneinsatz aufweist, der mindestens einen ersten passgenauen Abstandshalter zwischen zwei parallel zu den Löschblechen der Löschkammervorrichtung angeordneten Gehäusewandung des ersten Schaltgerätebereichs aufweist.

Erfindungswesentlich ist dabei, dass die Positionierung der einzelnen Bauteile im Gehäuse des Leistungsschalters ohne ein zusätzliches Verbindungsstück erfolgt, das heißt, nur durch entsprechende Ausformung der zu positionierenden Teile wird eine Gehäusestabilisierung im Kurzschlussfall erreicht. Der Vorteil besteht demgemäß darin, dass vorhandene Bauteile mit zusätzlichen Funktionen ohne Mehraufwand belegt werden.

In einer weiteren vorteilhaften Ausführungsform ist vorgesehen, dass parallel zum ersten Abstandshalter ein zweiter Abstandshalter am Blendeneinsatz ausgebildet ist. Dieser zusätzliche Abstandshalter verleiht der Baueinheit im ersten Schaltgerätebereich im Fall eines Kurzschlusses weitere Stabilität, so dass ein Ausbiegen der Gehäusewände im Auslösefall weitestgehend vermieden werden kann.

Vorzugsweise sind die erfindungsgemäßen Abstandshalter als vorstehende Querstege innerhalb des Blendeneinsatzes ausgebildet. Die vorstehenden Querstege weisen Außenflächen auf, die beim Einbau der Löschkammervorrichtung in das Gehäuse eng beziehungsweise passgenau an der Gehäuseinnenwand des Leistungsschalters eingepasst werden. Diese vorstehenden Querstege verhindern im Auslösefall, dass die Löschkammervorrichtung im Gehäuse in der Position verändert wird.

In einer weiteren, besonders vorteilhaften Ausführungsform ist vorgesehen, dass am Blendeneinsatz eine Nutkontur ausgebildet ist, in welcher ein Festschaltstück aufnehmbar ist. Auch diese zusätzliche Nutkontur dient dazu, das Festschaltstück im Auslösefall in seiner Position stabil zu halten. Das Festschaltstück ist in dieser Nutkontur positionsstabil fixiert.

Zudem ist in vorteilhafter Weise außerdem vorgesehen, dass am Festschaltstück ein Kühlblech befestigt ist. Vorzugsweise ist das Kühlblech in einem Gehäusehinterschnitt der Gehäuseinnenwandung des zweiten Schaltgerätebereichs fest positioniert. Diese zusätzliche Fixierung des Festschaltstücks am Kühlblech, das seinerseits positionsstabil in einem Gehäusehinterschnitt der Gehäuseinnenwandung des Leistungsschalters gehalten wird, dient ebenfalls der Gehäusestabilisierung im Auslösefall.

Vorzugsweise ist außerdem vorgesehen, dass der erfindungsgemäße Leistungsschalter so ausgebildet ist, dass das Gehäuse zweiteilig aufgebaut ist, wobei der erste Schaltgerätebereich in einem Gehäuseunterteil und der zweite Schaltgerätebereich in einem Gehäuseoberteil angeordnet sind. Der Leistungsschalter ist demgemäß Baukasten ähnlich zusammengesetzt, wodurch sich Vorteile bei der Montage ergeben.

Die Erfindung zeichnet sich dadurch aus, dass ohne Verwendung eines zusätzlichen Teils eine deutliche Versteifung des Gehäuses eines Leistungsschalters erreicht werden kann. Durch die erfindungsgemäßen Abstandshalter am Blendeneinsatz, der Nutkontur am Blendeneinsatz sowie der Fixierung des Kühlblechs in einem Hinterschnitt der Gehäuseinnenwandung des Leistungsschalters, wird das gesamte Gehäuse, insbesondere das Gehäuseunterteil des Leistungsschalters, vor einer Ausbiegung im Kurzschlussfall geschützt. Es werden demgemäß auftretende Spannungen im Gehäuseunterteil vermindert. Ein Bruch des Gehäuseunterteils wird - wenn überhaupt - zu größeren Kurzschlüssen, das heißt, zu größeren Druckbelastungen des Gehäuseunterteils verschoben. Ein wesentlicher Vorteil besteht darin, dass kein zusätzliches Teil benötigt wird, wodurch keine zusätzlichen Kosten entstehen. Durch die Stabilisierung aus Abstandshaltern, Nutkontur und Gehäusehinterschnitten der Gehäuseinnenwandungen, konnte nach ersten Ergebnissen die Belastung auf das Gehäuseunterteil soweit verringert werden, dass einem Kurzschluss von 100 kA standgehalten werden konnte.

Weitere Vorteile und Ausführungen der Erfindung werden nachfolgend anhand von Ausführungsbeispielen sowie anhand der Zeichnung erläutert.

Dabei zeigen schematisch:
Fig. 1 in einer perspektivischen Darstellung einen Teilbereich eines Gehäuseoberteils beziehungsweise Unterteils mit Löschkammervorrichtung;
Fig. 2 in einer perspektivischen Darstellung ein Ausführungsbeispiel eines erfindungsgemäßen Blendeneinsatzes für eine Löschkammervorrichtung eines Leistungsschalters.

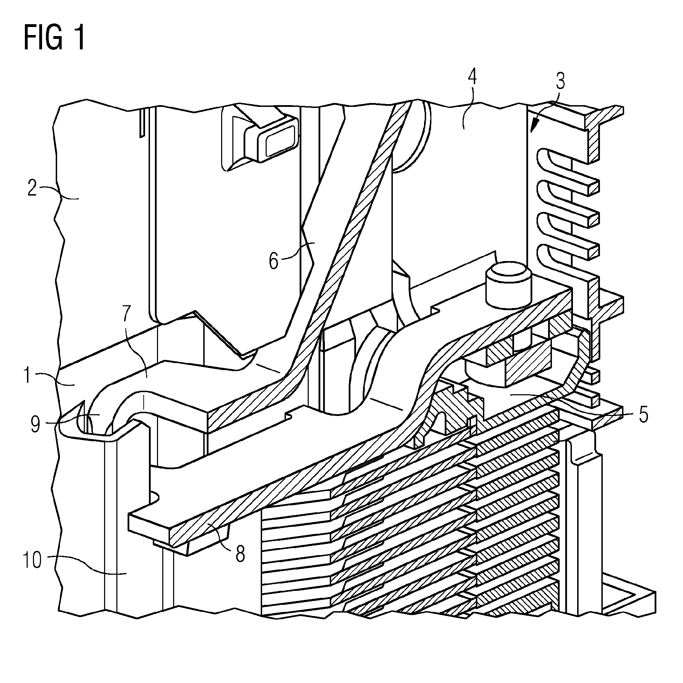

Fig. 1 zeigt einen Teilbereich eines Leistungsschalters mit einem Gehäuse aus einem Gehäuseunterteil 1, in welchem der erste Schaltgerätebereich angeordnet ist und einem Gehäuseoberteil 2, in welchem der zweite Schaltgerätebereich angeordnet ist. In Fig. 1 ist die formschlüssige Verbindung zwischen dem Gehäuseunterteil 1 und dem Gehäuseoberteil 2 dargestellt. In einem Gehäusehinterschitt 3 der Gehäuseinnenwandung im Bereich des Gehäuseoberteils 2 ist ein Kühlblech 4 angeordnet, das an einem Blendeneinsatz 5 innerhalb der Löschkammervorrichtung positioniert ist. Zusätzlich ist ein vorzugsweise U-förmiges Festschaltstück 6 mit zwei Schenkeln 7, 8 und einem die beiden Schenkel 7, 8 verbindenden Übergangsbereich 9 über den Schenkel 8 des Festsschaltstücks 6 am Blendeneinsatz 5 fixiert. Der Übergangsbereich 9 des Festschaltstücks 6 ist dabei in Widerhaken ähnlichen Gehäusestrukturen 10 positioniert, die vorzugsweise in L-Form aus dem Gehäuseunterteil 1 herausragen.

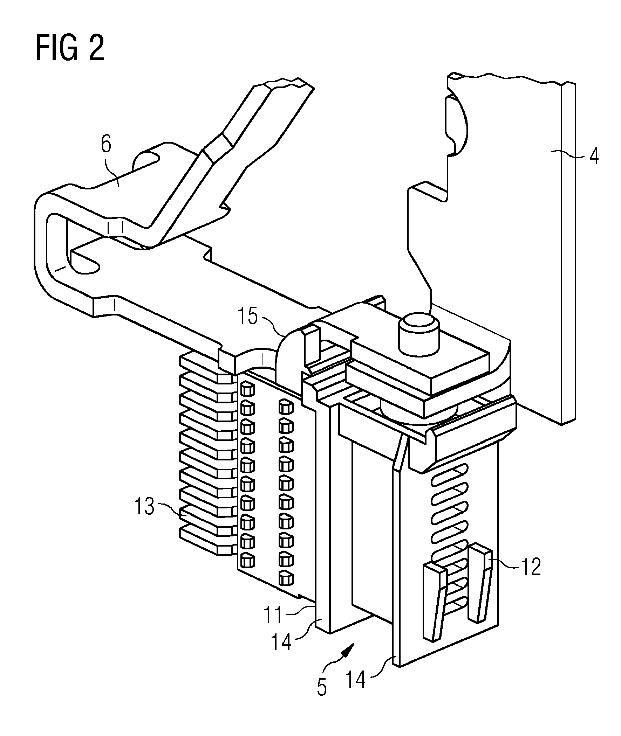

In Fig. 2 ist der erfindungsgemäße Blendeneinsatz 5 mit angeschlossenem Kühlblech 4 und Festschaltstück 6 dargestellt. Der erfindungsgemäße Blendeneinsatz 5 weist vorzugsweise zwei Abstandshalter 11, 12 auf, die als vorstehende Stege, insbesondere Querstege zu den Löschblechen 13 ausgebildet sind, wobei die Querstege eine Außenfläche 14 aufweisen, die eine passgenaue und positionsstabile Anordnung zwischen den zwei parallel zu den Löschblechen 13 angeordneten Gehäusewandungen des Leistungsschalters ermöglichen. Der Blendeneinsatz 5 weist zudem eine Nutkontur 15 auf, in welche der Schenkel 8 des Festschaltstücks 6 einführbar ist.

Die Erfindung zeichnet sich dadurch aus, dass ohne Verwendung eines zusätzlichen Teils eine deutliche Versteifung des Gehäuses eines Leistungsschalters erreicht werden kann. Durch die erfindungsgemäßen Abstandshalter am Blendeneinsatz, der Nutkontur am Blendeneinsatz sowie der Fixierung des Kühlblechs in einem Hinterschnitt der Gehäuseinnenwandung des Leistungsschalters, wird das gesamte Gehäuse, insbesondere das Gehäuseunterteil des Leistungsschalters, vor einer Ausbiegung im Kurzschlussfall geschützt. Es werden demgemäß auftretende Spannungen im Gehäuseunterteil vermindert. Ein Bruch des Gehäuseunterteils wird - wenn überhaupt - zu größeren Kurzschlüssen, das heißt, zu größeren Druckbelastungen des Gehäuseunterteils verschoben. Ein wesentlicher Vorteil besteht darin, dass kein zusätzliches Teil benötigt wird, wodurch keine zusätzlichen Kosten entstehen. Durch die Stabilisierung aus Abstandshaltern, Nutkontur und Gehäusehinterschnitten der Gehäuseinnenwandungen, konnte nach ersten Ergebnissen die Belastung auf das Gehäuseunterteil soweit verringert werden, dass einem Kurzschluss von 100 kA standgehalten werden konnte.

## Patentansprüche

1. Leistungsschalter mit einem Gehäuse, in welchem ein erster Schaltgerätebereich, in welchem eine Löschkammervorrichtung und eine Kontaktschiebervorrichtung mit beweglichen Schaltstücken angeordnet sind, welche gegenüber liegend zu Festschaltstücken positioniert sind, und ein zweiter Schaltgerätebereich angeordnet sind, in welchem eine Stromauslösegruppe aus einem Kurzschlussauslöser und einem Überlastauslöser angeordnet sind, **dadurch gekennzeichnet, dass** die Löschkammervorichtung im ersten Schaltgerätebereich einen Blendeneinsatz (5) aufweist, der mindestens einen ersten passgenauen Abstandshalter (11) zwischen zwei parallel zu den Löschblechen (12) der Löschkammervorrichtung angeordneten Gehäusewandungen des ersten Schaltgerätebereichs aufweist.

2. Leistungsschalter nach Anspruch 1, **dadurch gekennzeichnet, dass** parallel zum ersten Abstandshalter (11) ein zweiter Abstandshalter (12) am Blendeneinsatz (5) ausgebildet ist.

3. Leistungsschalter nach Anspruch 1 oder 2, **dadurch gekennzeichnet, dass** die Abstandshalter (11, 12) als vorstehende Querstege ausgebildet sind.

4. Leistungsschalter nach einem der vorhergehenden Ansprüche, **dadurch gekennzeichnet, dass** am Blendeneinsatz (5) eine Nutkontur (15) ausgebildet ist, in welcher ein Festschaltstück (6) aufnehmbar ist.

5. Leistungsschalter nach Anspruch 4, **dadurch gekennzeichnet, dass** am Festschaltstück (6) ein Kühlblech (4) befestigt ist.

6. Leistungsschalter nach Anspruch 5, **dadurch gekennzeichnet, dass** das Kühlblech (4) in einem Gehäusehinterschnitt (3) der Gehäuseinnenwandung des zweiten Schaltgerätebereichs fest positioniert ist.

7. Leistungsschalter nach einem der vorhergehenden Ansprüche, **dadurch gekennzeichnet, dass** das Gehäuse zweiteilig aufgebaut ist, wobei der erste Schaltgerätebereich in einem Gehäuseunterteil (1) und der zweite Schaltgerätebereich in einem Gehäuseoberteil (2) angeordnet ist.
